## Europäisches Patentamt
## European Patent Office
## Office européen des brevets

(19)

(11) Veröffentlichungsnummer: **0 041 073**
**B1**

(12) **EUROPÄISCHE PATENTSCHRIFT**

(45) Veröffentlichungstag der Patentschrift:
18.07.84

(51) Int. Cl.³: **B 29 C 17/07**

(21) Anmeldenummer: 80102706.1

(22) Anmeldetag: 16.05.80

(54) Verfahren und Vorrichtung zur Ausformung molekular orientierter thermoplastischer Hohlkörper.

(43) Veröffentlichungstag der Anmeldung:
09.12.81 Patentblatt 81/49

(45) Bekanntmachung des Hinweises auf die Patenterteilung:
18.07.84 Patentblatt 84/29

(84) Benannte Vertragsstaaten:
DE FR GB IT

(56) Entgegenhaltungen:
DE - B - 2 307 727
US - A - 3 288 317
US - A - 3 525 123
US - A - 3 651 186
US - A - 3 751 542
US - A - 3 852 398
US - A - 3 872 203
US - A - 3 892 830
US - A - 3 899 279
US - A - 3 982 872
US - A - 4 106 886

(73) Patentinhaber: BEKUM Maschinenfabriken GmbH,
Lankwitzerstrasse 14/15, D-1000 Berlin 42 (DE)

(72) Erfinder: Mehnert, Gottfried, Messelstrasse 25,
D-1000 Berlin (DE)
Erfinder: Roos, Uwe, Hasenheide 12, D-3123 Bodenteich
(DE)
Erfinder: Younkin, Harry Allen, 800 Greenbank Road,
Wilmington, Del. 19808 (US)

(74) Vertreter: Huss, Carl-Hans, Dipl.-Ing. et al,
Rathausstrasse 14, D-8100 Garmisch-Partenkirchen
(DE)

## Beschreibung

Die Erfindung betrifft ein Verfahren und eine Vorrichtung zur Herstellung molekular biaxial orientierter Hohlkörper aus thermoplastischen Kunststoffen, wobei ein auf die für die molekulare Orientierung geeignete Temperatur gebrachter, vertikal ausgerichteter, rohrförmiger Rohling am oberen Ende festgeklemmt, am unteren Ende von einem Greifer erfaßt mechanisch axial gereckt, von einer sich schließenden Blasform aufgenommen, mittels eines in das obere Ende ragenden Blasdornes durch Einführen eines Druckmittels zu einem Hohlkörper ausgeformt und nach dem Öffnen der Form entformt wird.

Ein derartiges Verfahren ist beispielsweise aus der US-A-3 651 186 bekannt und sehr umständlich, weil die Rohlinge einzeln bei der Verarbeitung aufgeheizt und offenbar von Hand in die Reck- und Blasvorrichtung gebracht werden müssen, was nicht nur arbeitsaufwendig ist, sondern auch nur die Herstellung sehr geringer Stückzahlen gestattet. Die heute geforderte Massenproduktion auch im Halsbereich molekular orientierter Hohlkörper ist daher nach diesem Verfahren nicht möglich.

Ein anderes bekanntes Verfahren (US-A-3 892 830) beschreibt zwar, wenigstens in den Grundzügen, eine automatisierte Herstellung biaxial orientierter Hohlkörper, wobei von einem kontinuierlich angelieferten Rohrstrang mittels einer Schneideinrichtung die einzelnen Rohlinge abgetrennt werden, worauf sie in einen Ofen und über in diesem umlaufende Halter fallen. Dort auf die erforderliche Temperatur gebracht, werden sie durch eine Greifereinrichtung, deren technische Einzelheiten nicht näher beschrieben sind, von den Haltern abgenommen, aus dem Ofen heraus und zwischen Temperierwerkzeuge geführt, durch die bestimmte Stellen der Oberfläche der Rohlinge gekühlt werden sollen, worauf die weiterhin von der Greifereinrichtung gehaltenen Rohlinge zwischen geöffnete Formhälften und über einen Blasdorn geführt, auf diesem unter Kalibrierung und Ausformung des Halsteiles festgeklemmt, mittels der genannten Greifereinrichtung axial gereckt und nach Schließen der Form zum Hohlkörper aufgeblasen werden, während die Greifereinrichtung in ihre Ausgangsposition zurückkehrt und dem Ofen einen neuen Rohling entnimmt.

Auch dieses Verfahren läßt noch keinen Weg zu einer Massenproduktion mit hohem stündlichen Ausstoß erkennen, denn die Bewegungen des Greifers sind offenbar sehr kompliziert und weiträumig, beanspruchen also eine nicht unbeachtliche Zeit des Gesamtzyklus. Der Hauptnachteil dieses Verfahrens liegt aber darin, daß der Halsbereich der Hohlkörper nicht molekular orientiert werden kann, ihm daher die Durchsichtigkeit und Widerstandsfähigkeit fehlt, die bei einem Behälter, der insgesamt wenigstens axial orientiertes Material aufweist, erreicht werden kann.

Der Erfindung liegt daher die Aufgabe zugrunde, unter Beibehaltung des Vorteiles, daß auch der Behälterhals biaxial orientiert wird einen von einem Extruder in horizontaler Richtung bereitgestellten Strang kontinuierlich zu Hohlkörpern zu verarbeiten, wobei eine hohe Leistung und bei der Entformung abfallfreie Hohlkörper erzielt werden sollen.

Diese Aufgabe wird im Hinblick auf das Verfahren durch die im Anspruch 1 angegebenen, im Hinblick auf die Vorrichtung durch die im Anspruch 15 angegebenen Merkmale gelöst. Weitere vorteilhafte Merkmale sind in den Unteransprüchen angegeben.

Einige bevorzugte, jedoch nichtsdestoweniger nur der Verdeutlichung dienende Ausführungsformen der Erfindung sind in der folgenden Beschreibung unter Bezugnahme auf die Zeichnungen näher erläutert. Es stellt dar:

Fig. 1 ein Funktionsschema einer Vorrichtung nach der vorliegenden Erfindung,

Fig. 2 eine perspektivische Teilsicht einer Ausführungsform der Rohling-Übergabeeinrichtung,

Fig. 3 bis 7 schematische Aufsichten zur Verdeutlichung der Funktion der Zuführeinrichtung und der Übergabeeinrichtung gemäß Fig. 2,

Fig. 8 eine Ansicht entsprechend der Linie 8-8 in Fig. 3,

Fig. 9 eine Ansicht entlang der Linie 9-9 in Fig. 4,

Fig. 10 eine Ansicht entlang der Linie 10-10 in Fig. 5,

Fig. 11 eine Ansicht entsprechend Fig. 10, wobei ein späteres Stadium der Funktion der Rohlingübergabeeinrichtung dargestellt ist,

Fig. 12 eine Ansicht entlang der Linie 12-12 in Fig. 6,

Fig. 13 eine perspektivische Teilansicht einer anderen Ausführungsform der Rohling-Übergabeeinrichtung,

Fig. 14 bis 17 schematische Aufsichten zur Darstellung der Funktion der Rohling-Übergabeeinrichtung gemäß Fig. 13,

Fig. 18 bis 22 Ansichten entsprechend den Fig. 8 bis 12, jedoch zur Verdeutlichung einer alternativen Durchführung der Rohlingsreckung.

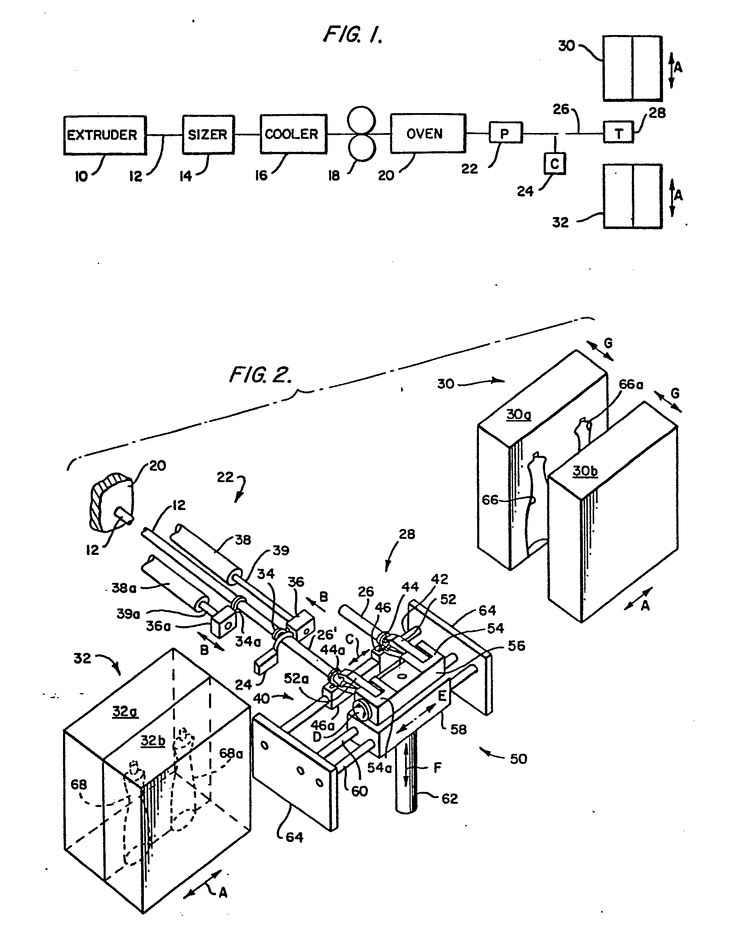

Bezugnehmend auf die Zeichnungen und insbesondere das Funktionsschema der Fig. 1 extrudiert ein Extruder 10 einen kontinuierlichen Rohrstrang 12, der einen Dimensionierer 14 durchläuft, in welchem der innere und äußere Durchmesser des Rohrstrangs festgelegt werden, und dann einen Kühler 16. Beispielsweise wird bei Polypropylenmaterial der Rohrstrang auf 49° Celsius abgekühlt, um die Kristallisation zu beschleunigen. Der Rohrstrang 12 wird aus dem Extruder 10 und durch den Dimensionierer 14 und den Kühler 16 mit Hilfe von Antriebseinrichtungen 18 gezogen, die beispielsweise aus einem Satz drehbar angebrachter gegenüberliegender Reifen bestehen kann. Der Rohrstrang 12 wird in einem Ofen 20 auf eine geeignete Orientierungstemperatur, also etwa 140° Celsius bis 150° Celsius bei Polypropylen wiedererwärmt und wird nach seiner Wiedererwärmung mittels einer Zuführeinrichtung 22 aus dem Ofen gezogen, an einer Schneideeinrichtung 24 vorbei, die von dem Rohrstrang einzelne Rohrlängen oder Rohlinge 26 abtrennt.

Weiterhin unter Bezugnahme auf Fig. 1 wird ein Rohling 26 an einem Endteil durch eine Übergabeeinrichtung 28 erfaßt und vertikal verschwenkt zur Aufnahme in einer von zwei Blasformen 30 und 32, welche sich jeweils von der in Fig. 1 dargestellten Blasstellung zu einer Aufnahmestellung direkt über der Übergabeeinrichtung 28 bewegen, die vertikal ausfährt, um den Rohling 26 über einen (nicht dargestellten) Blasdorn zu führen, der mit der Blasform zusammenwirkt. Das obere Ende des Rohlings 26 wird von Klemmbacken (nicht dargestellt) erfaßt, die oberhalb des oberen Teiles der Form, beispielsweise 30, angeordnet sind, und während die Übergabeeinrichtung 28 zurückgezogen wird, wird der Rohling vor dem Schließen der Form gereckt. Abfallmaterial am Boden des Rohlings wird nach dem Schließen der Form 30 abgetrennt und, während die Übergabeeinrichtung 28 zur Aufnahme weiterer Rohlinge zurückkehrt, entfernt. Die Blasform 30 kehrt dann nach außen in die Blasposition zurück, um die Blasformung eines völlig fertigen Behälters zu vollenden. Unterdessen hat die Übergabeeinrichtung 28 einen weiteren Rohling 26 erfaßt, der in die entsprechende Lage gedreht wird. Die zweite Blasform 32 bewegt sich von ihrer äußeren Blasstellung weg, um den Rohling in der soeben bezüglich der Blasform 30 beschriebenen Weise aufzunehmen. Der Vorgang wird wiederholt, wobei ein entsprechendes Steuersystem (nicht dargestellt) die Bewegung und den zeitlichen Ablauf der Vorrichtungsteile und Verfahrensschritte regelt.

Die in Fig. 1 dargestellte Vorrichtung weist zwei Blasformen auf, es kann aber auch nur eine verwendet werden, obwohl dadurch die Ausstoßgeschwindigkeit verringert würde. Andererseits können auch mehr als zwei Formen vorgesehen sein, die für die aufeinanderfolgende Aufnahme eines Rohlings von der Übergabeeinrichtung angeordnet sind. Außerdem kann jede Form jede geeignete Anzahl von Formhöhlungen aufweisen, und es kann anstelle der Bewegung der Formen zu der Übergabeeinrichtung hin, um einen Vorformling aufzunehmen, die Form stationär bleiben und die Übergabeeinrichtung sich zur Form hin bewegen, um den Rohling in diese zu bringen, oder die Übergabeeinrichtung und die Blasform können beide in eine gemeinsame Position bewegt werden, um die Rohlingübergabe durchzuführen.

Während, wie erwähnt, jede der Formen 30 und 32 mit jeder geeigneten Anzahl von Formhöhlungen versehen sein kann, abhängig von der gewünschten Produktion im Rahmen des Verfahrens, wird im folgenden jede Form als mit zwei Höhlungen versehen beschrieben, und die entsprechende Rohling-Übergabeeinrichtung muß demnach gleichzeitig zwei Rohlinge in jede Form einbringen.

Ein Ausführungsbeispiel der Zuführeinrichtung 22 und der Übergabeeinrichtung 28 ist in Fig. 2 dargestellt. Die Zuführeinrichtung 22 besteht aus zwei identischen Systemen, jeweils einem an jeder Seite des Rohrstranges 12. Der Einfachheit halber werden die (in der Darstellung der Fig. 2) auf der linken Seite des Rohrstranges 12 angeordneten Teile mit einem zusätzlichen »a« versehen, und die folgende Beschreibung des rechten Systems trifft auch auf das linke zu. Jedes der Zugsysteme der Zuführeinrichtung 22 umfaßt ein Paar schwenkbarer Greifer 34, die mit einem Schließmotor 36 gekoppelt sind, welcher das Öffnen und Schließen der Greifer um den Rohrstrang 12 steuert. Der Schließmotor 36 ist in Längsrichtung parallel zur Achse des Rohrstranges 12 beweglich angeordnet und wird mittels eines Antriebes 38, wie z. B. einem herkömmlichen Hydraulik-Zylinder, bewegt, der mit dem Schließmotor 36 durch eine Kolbenstange 39 verbunden ist. Wenn der Schließmotor 36 eine Stellung neben der Schneideeinrichtung 24 erreicht, werden die Greifer 34 geöffnet und geben den Rohrstrang 12 frei, während der Antrieb 38 die Rückkehrbewegung des Teiles 36 in der durch den Pfeil B angedeuteten Richtung einleitet. Währenddessen ist der Schließmotor 36a der Zuführeinrichtung auf der anderen Seite des Rohrstranges 12 in seiner hintersten Stellung, die Greifer 34a werden um den Rohrstrang 12 geschlossen, und der Antrieb 38a leitet eine Vorwärtsbewegung des Schließmotors ein. In ihrer offenen Stellung sind die Greifer 34 weit genug voneinander entfernt, um den Durchgang der geschlossenen Greifer 34a zwischen ihnen zu ermöglichen, so daß im Betrieb die Systeme der Zuführeinrichtung einander übergreifend arbeiten, um den Rohrstrang 12 aus dem Ofen 20 zu ziehen und ihn an der Schneideeinrichtung 24 vorbeizuführen. Außerdem ist die Hublänge der Antriebe 38 und damit die jeweils hinterste Stellung der Schließmotoren 36, 36a einstellbar, um die Länge des Rohlings 26, der mittels der Schneideeinrichtung 24 von dem Rohrstrang 12 abgeschnitten wird, zu bemessen.

Die Übergabeeinrichtung 28 umfaßt eine als Hilfsgreifer 40 bezeichnete vorläufige Greifer- und Magaziniereinrichtung, die, wie durch den Pfeil C angedeutet, entlang einer Führung 42 mittels konventioneller, nicht dargestellter Einrichtungen, in einer zur Zuführeinrichtung, d. h. der Längsachse des Rohrstranges 12 senkrechten Ebene bewegbar ist. Der Hilfsgreifer 40 schließt einen ersten Satz schwenkbarer Backen 44 ein, die mit einem Antrieb 46 verbunden sind, und eine zweite identische Anordnung 44a, 46a bei der Darstellung in Fig. 2 links davon. Die Backensätze 44 und 44a können durch die entsprechenden Antriebe 46, 46a unabhängig voneinander innerhalb der vorgenannten Bewegungsebene des Hilfsgreifers 40 geöffnet und geschlossen werden.

Ein Hauptgreifer 50 ist in einer zur Ebene des Hilfsgreifers parallelen Ebene beweglich, die die Schließebene der Formen 30 und 32 einschließt, und weist Paare oder Sätze von Klemmen 52, 52a auf, die mit entsprechenden Antrieben 54, 54a verbunden sind, welche das Öffnen und Schließen der Klemmen bewirken. Die Klemmensätze 52, 52a und die Antriebe 54, 54a sind auf einem Klemmenträger 56 angebracht, der in Richtung des Pfeiles D von einer ersten Stellung, in welcher die Klemmen horizontal in einer die Längsachse des Rohrstranges 12 einschließenden Ebene ausgerichtet sind, in eine zweite Stellung schwenkbar ist, in welcher sich die Klemmen vertikal erstrecken. Der Klemmenträger 56 wiederum wird von einem Hauptgreiferschlitten 58 getragen, der auf Führungsstangen 60 durch übliche Einrichtungen (nicht dargestellt) in Richtung des Pfeiles E verschiebbar ist. Ein Hubmotor 62 ist durch eine Hubstange 63 mit dem Klemmenträger 56 verbunden, um ein Ausfahren und Zurückziehen des Klemmenträgers und der Klemmensätze 52, 52a bezüglich des Hauptgreiferschlittens 58 in Richtung des Pfeiles F zu bewirken. Der Zweck dieses Ausfahrens und Zurückziehens der Klemmensätze 52, 52a wird später näher beschrieben.

Wie aus Fig. 2 ersichtlich, weist jede der Blasformen 30 und 32 zwei teilbare Formhälften auf, die jeweils mit »a« und »b« gekennzeichnet sind und in der Schließebene der jeweiligen Form aufeinandertreffen. Diese Formhälften, wie beispielsweise die Hälften 30a, 30b sind, wie üblich, auf einem (nicht dargestellten) Schließgestell angebracht, um in der durch die Pfeile G gekennzeichneten Richtung geöffnet und geschlossen zu werden. Jede Formhälfte weist zwei Formhöhlungen 66 und 66a bei der Blasform 30 bzw. 68 und 68a bei der Blasform 32 auf. Wie bereits erwähnt, ist jede der Blasformen 30 und 32 an einem nicht dargestellten Schließgestell befestigt, das die Führungs- und Betätigungseinrichtungen zum Öffnen und Schließen der Formen ebenso einschließt wie Einrichtungen zur Bewegung jeder Blasform von ihrer in Fig. 2 dargestellten Blasstellung außerhalb der Mittellinie des Rohrstranges 12 zu einer inneren Aufnahmestellung für den Rohling oberhalb des Hauptgreifers 50, wie später näher beschrieben.

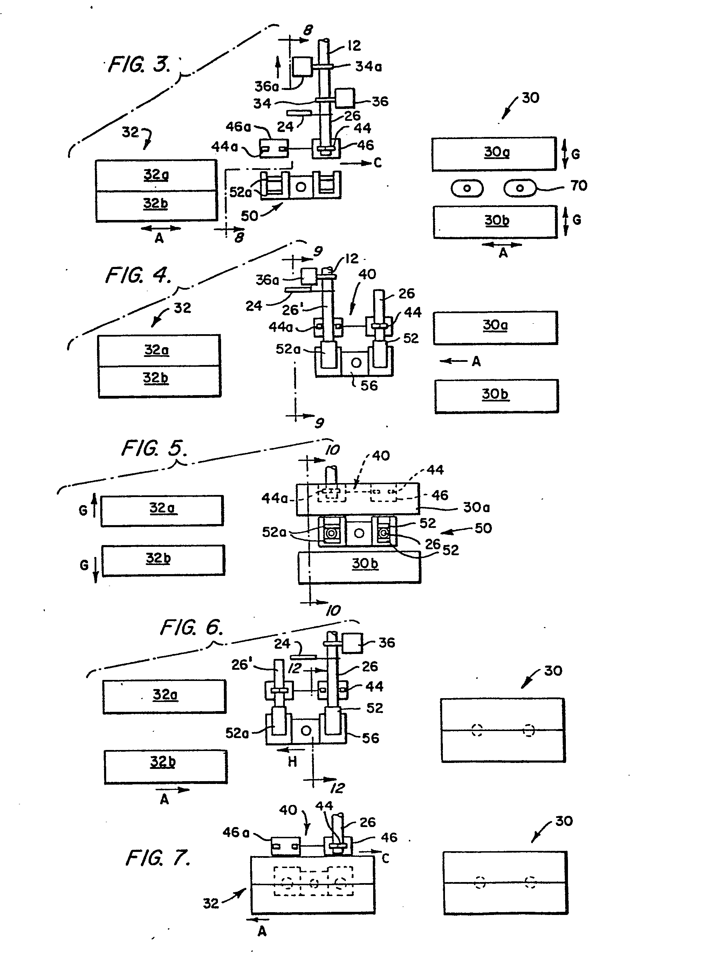

Die Funktion der Zuführeinrichtung 22 und der Übergabeeinrichtung 28 und die Einbringung der Rohlinge in die Blasformen 30 und 32 wird nun unter Bezugnahme auf die Fig. 3 bis 12 der Zeichnungen erläutert. Dabei sind einige der konstruktiven Merkmale, die in den Fig. 8 bis 12 gezeigt sind, in den Aufsichten der Fig. 3 bis 7 nicht enthalten, um die Übersichtlichkeit dieser Figuren zu verbessern.

Der Einfachheit halber wird der dem rechten Satz von Backen 44 und dem rechten Klemmensatz 52 zugeordnete Rohling mit 26 bezeichnet und der dem linken Satz von Backen 44a und dem linken Klammersatz 52a zugeordnete mit 26'.

Gemäß Fig. 3 befindet sich der Greifersatz 34 in seiner vordersten Stellung nahe der Schneideeinrichtung 24, und das freie Ende des Rohrstranges 12 wurde vom rechten Satz der Backen 44 des Hilfsgreifers 40 erfaßt. Die linken Backen 44a des Hilfsgreifers 40 sind dabei geöffnet. Die Hälften der Blasform 32 sind noch geschlossen, und der Blasformprozeß ist bezüglich der früher in sie eingebrachten Rohlinge im Gange. Wie auch aus Fig. 8 ersichtlich, sind dagegen die Formhälften 30a und 30b geöffnet, und die ausgeformten Behälter 70, von welchen einer sichtbar ist, werden freigegeben.

In Fig. 4 bleiben die Hälften 30a und 30b in der geöffneten auseinandergefahrenen Stellung als Vorbereitung für die Aufnahme des nächsten Satzes von Rohlingen, während in der Form 32a der Blasformprozeß fortgesetzt wird. Ein Rohling 26 wurde mittlerweile von dem Rohrstrang 12 durch die Schneideeinrichtung 24 abgetrennt, und der Hilfsgreifer 40 nach rechts verschoben, um den linken Backensatz 44a in Übereinstimmung mit der Längsachse des Rohrstranges zu bringen. Zu diesem Zeitpunkt sind beide Klemmensätze 52 und 52a in die horizontale Stellung geschwenkt und der Hauptgreifer durch eine Bewegung des Hauptgreiferschlittens 58 nach rechts verschoben, unter Ausrichtung des linken Klemmensatzes 52a bezüglich des Rohrstranges 22. Beide Klemmensätze bleiben dabei offen, so daß sich der rechte Klemmensatz 52 über den Teil des Rohlings 26 schiebt, der vom rechten Backenpaar 44 gehalten wird. Die Backen 44a bleiben offen, und das Ende des Rohrstranges 12 läuft zwischen ihnen hindurch und in die Klemmen 52a. Auf diese Weise gelangen die Enden sowohl des Rohlings 26 als auch 26' zwischen die offenen Klemmensätze 52 und 52a, die daraufhin um die beiden Rohlinge geschlossen werden, worauf die Schneideeinrichtung 24 in Funktion tritt, um auch den Rohling 26' vom Rohrstrang 12 zu trennen.

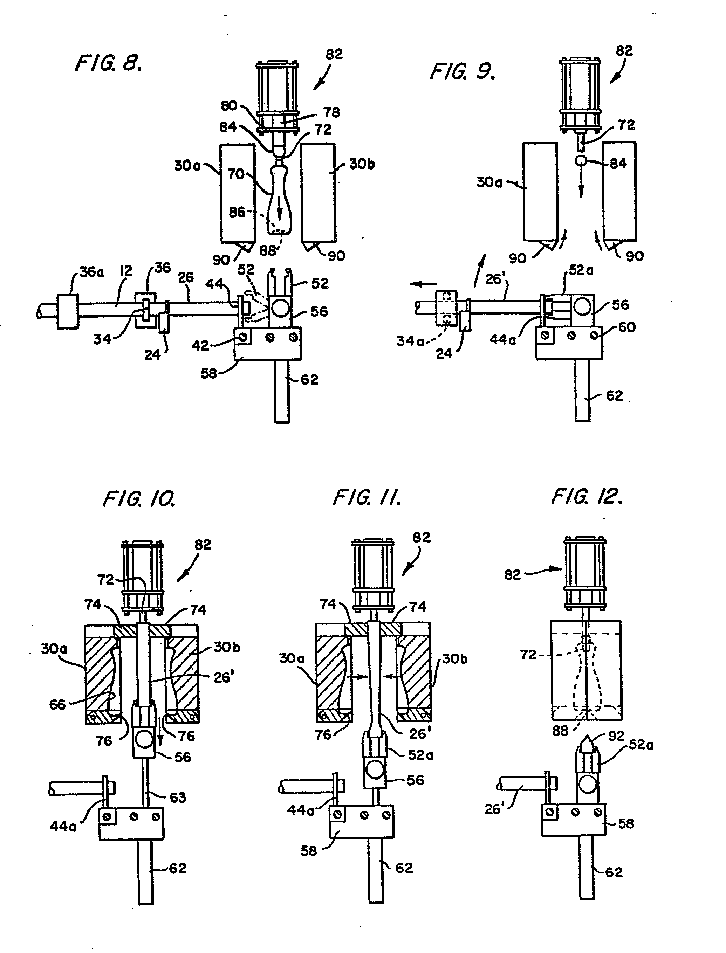

Wie in Fig. 9 dargestellt, wurde der Rohling 26' durch die Vorwärtsbewegung der Greifer 34a herangeführt, die nach dem Trennen durch die Schneideeinrichtung 24 den Rohrstrang 12 freigeben und ihre Rückkehrbewegung nach links bezüglich der Fig. 9 beginnen. Beide Klemmensätze 52, 52a des Hauptgreifers 50 werden bei der Darstellung in Fig. 9 gleichzeitig im Uhrzeigersinn verschwenkt, um die Rohlinge 26, 26' vertikal in der Schließebene der Formhälften 30a, 30b bzw. 32a, 32b auszurichten, in Vorbereitung ihrer Aufnahme in der Blasform 30.

Währenddessen werden die geöffneten Formhälften 30a, 30b der Blasform 30 in Richtung des Pfeiles A in Fig. 4 nach links bewegt, um die Rohlinge vom Hauptgreifer 50 aufzunehmen. Dieser Zustand ist in Fig. 5 dargestellt, aus der auch der Beginn des Öffnens der Formhälften 32a, 32b der Blasform 32 nach Vollendung des Blasformvorganges ersichtlich ist.

Die Klemmensätze 52, 52a zusammen mit ihren Antrieben 54, 54a und dem Klemmenträger 56 werden durch Ausfahren des Hubmotors 62 vertikal angehoben, um die Rohlinge über die Blasdorne 72, von welchen einer in den Fig. 8 bis 12 dargestellt ist, zu führen, die der Blasform 30 zugeordnet sind. Dies kann der Fig. 10 entnommen werden, die auch ein Paar Klemmbacken 74 erkennen läßt, die sich um den oberen Teil der Rohlinge geschlossen haben, um sie auf den Blasdornen 72 festzuklemmen. Nachdem die Rohlinge festgeklemmt wurden, wird der Klemmenträger 56 durch den Hubmotor 62 zurückgezogen, während die Klemmbacken 52, 52a weiterhin die Enden der Rohlinge sicher festhalten. Die Absenkung des Klemmenträgers 56 reckt die Rohlinge in Längsrichtung und orientiert das Material axial, und diese Reckung wird fortgesetzt, bis der Klemmenträger eine Zwischenposition erreicht hat, die sich aus dem gewünschten Reckgrad für die Rohlinge ergibt. Dies ist in Fig. 11 dargestellt in einer Ansicht entsprechend der der Fig. 10, jedoch in einem späteren Stadium.

Nun werden die Formhälften 30a, 30b um die gereckten Rohlinge geschlossen, und nachdem die Formhälften vollständig geschlossen sind, quetschen Kanten 76 im unteren Teil der Formhälften einen unteren Abschnitt des Rohlings zu und erzeugen so eine dichte Unterfläche für den zu blasenden Behälter. Durch eine weitere Zurückziehung des Klemmenträgers 56 kann der Bodenabfall von den Rohlingen abgetrennt werden, der dann, wenn die Klemmensätze 52, 52a geöffnet werden, beseitigt wird. Nachdem die Formhälften 30a, 30b vollkommen geschlossen sind, kehrt die Form 30 in ihre Blasstellung zurück.

Wie aus Fig. 5 hervorgeht, beginnt sich, während der Klemmenträger 56, um die Rohlinge zu recken, zurückgezogen wurde, ein weiterer Satz von Rohlingen beim Hilfsgreifer 40 anzusammeln, wobei das Ende des nächsten Rohlings von den Backen 44a erfaßt wird, um durch die Schneideeinrichtung 24 abgetrennt zu werden. Der Zustand nach Fig. 6 ist im wesentlichen ähnlich dem der Fig. 4, abgesehen davon, daß nun der Hauptgreifer 50 nach links verschoben wurde, wie durch den Pfeil H angedeutet, um den rechten Klemmensatz 52 in die Verlängerung der Längsachse des Rohrstranges 12 zu bringen. Zu diesem Zeitpunkt ist der von dem linken Backensatz 44a des Hilfsgreifers 40 gehaltene neue Rohling 26' abgetrennt und gegenüber dem linken Klemmensatz 52a des Hauptgreifers 50 ausgerichtet. Die Backen 44 des Hilfsgreifers bleiben offen, und ein neuer Rohling 26 ragt durch sie hindurch in den offenen Klemmensatz 52. Beide Klemmensätze 52, 52a des Hauptgreifers 50 werden dann um die Enden der Rohlinge 26, 26' geschlossen und gleichzeitig die Schneideeinrichtung 24 betätigt, um den Rohling 26 vom Rohrstrang 12 abzutrennen. Die Klemmensätze 52, 52a werden dann in der vorgeschriebenen Weise verschwenkt und die Rohlinge vertikal zur Aufnahme in der Blasform 32 ausgerichtet.

Gemäß Fig. 7 wird der Zyklus fortgesetzt, indem das Ende des nächsten Abschnittes des Rohrstranges 12 durch den rechten Backensatz 44 des Hilfsgreifers 40 ergriffen wird. Nach dem Abtrennen des Rohlings 26 wird der Hilfsgreifer 40 nach rechts verschoben in Richtung des in Fig. 7 dargestellten Pfeiles. Mittlerweile haben die Klemmensätze 52, 52a des Hauptgreifers 50 ihre Rückziehbewegung beendet, und die Form 32a wird in Pfeilrichtung A in die Blasstellung der Fig. 3 verschoben. Zu diesem Zeitpunkt ist auch die Stellung des Hilfsgreifers 40 und des Hauptgreifers 50 die gleiche, wie in Fig. 3 dargestellt, und der nächste Zyklus beginnt mit der genannten Verschiebung des Hilfsgreifers 40 nach rechts.

Eine Anzahl weiterer Merkmale der vorliegenden Blasformmaschine sind in den Fig. 8 bis 12 dargestellt. Eine rohrförmige Hülse 78 umgibt jeden Blasdorn koaxial und ist unabhängig vom Blasdorn in Längsrichtung hin- und herbewegbar. Die Hülse 78 wirkt mit einer Abstreifplatte 80 zusammen, um Abfallmaterial, das durch die Hülse abgetrennt wurde zu entfernen. Der Blasdorn 72, die Hülse 78 und die Abstreifplatte 80 sind Teile einer Blas- und Kalibriereinrichtung 82, die auch die Einrichtungen zur Steuerung der unabhängigen Bewegungen von Blasdorn und Hülse einschließt. Die Blas- und Kalibriereinrichtung 82 ist mit dem Schließgestell (nicht dargestellt) verbunden und zusammen mit diesem beweglich und die Bewegungen des Blasdornes 72 und der Hülse 78 sind mit dem Öffnen und Schließen der Formhälften 30a und 30b koordiniert. In der Schlußphase der Blasformung des Behälters 70 in der Blasform 30 wird die rohrförmige Hülse 78 in Richtung auf den Halsbereich der Formhälften verschoben, um das Abfallmaterial 84 vom Halsbereich des ausgeformten Behälters abzutrennen und eine fertige Öffnungsfläche am Behälter zu schaffen. Das Abfallmaterial 84 haftet an der rohrförmigen Hülse 78 und wird beim Zurückziehen der Hülse aus der Form entfernt. Durch eine weitere Zurückziehung der rohrförmigen Hülse 78 stößt es gegen die Unterfläche der Abstreifpaltte 80 und wird von der rohrförmigen Hülse 78 abgestreift. Das Abfallmaterial 84 kann dann zwischen den offenen Formhälften hindurchfallen, und nachdem der ausgeformte Behälter früher freigegeben wurde, können der ausgeformte Behälter und das Abfallmaterial ohne weiteres auf übliche Weise getrennt werden. Die vorbeschriebenen Vorgänge sind aus den Fig. 8 und 9 ersichtlich. Selbstverständlich ist für jede Formhöhlung ein Blasdorn und eine koaxiale Hülse vorgesehen, wenn auch nur ein Satz vorstehend beschrieben und in der Zeichnung dargestellt ist.

Der Blasdorn kann auch zur Kalibrierung und Ausformung des inneren Durchmessers der Behälterhalsöffnung dienen, und die rohrförmige Hülse kann verwendet werden, um während ihrer Abwärtsbewegung orientiertes Material in den Halsbereich des Behälters zu stauchen, um so exakt ausgeformte Verschlußvorsprünge, wie z. B. Verschlußgewinde, an der Außenfläche des Behälterhalses auszuformen.

Es wurde bereits erwähnt, daß das Schließen der Formhälften dazu führt, daß die Formkanten 56 an den unteren Begrenzungen der Formen den Rohling quetschen und eine Schweiß- oder Quetschnaht 88 an der Bodenfläche des ausgeformten Behälters 70 bilden. Der Behälter 70 kann dabei auch mit einer konkaven Bodenfläche oder Einwölbung 86 versehen sein, welche gleichzeitig mit der Blasverformung durch Bodeneinsätze 90 im unteren Teil der Formhälften erzeugt wird. Um genügend Platz für die Entformung des fertigen Behälters 70 zu haben, können die Bodeneinsätze 90 so angebracht sein, daß sie eine Relativbewegung bezüglich der Formhälften ermöglichen. Dies kann beispielsweise durch eine schwenkbare Verbindung der Bodeneinsätze 90 mit den unteren Teilen der Formhälften, wie in den Fig. 8 und 9 dargestellt, geschehen. Nach dem Abtrennen des Bodenabfalls 92 bewirken nicht dargestellte Antriebseinrichtungen das Schwenken der Bodeneinsätze 90 nach unten, während sich die Formhälften 30a, 30b öffnen, um die Entnahme der ausgeformten Behälter 70 zu ermöglichen. Danach schwenken die Antriebseinrichtungen die Bodeneinsätze 90 wieder in ihre Normalstellung in Richtung der in Fig. 9 eingezeichneten Pfeile zurück. Vorteilhafterweise können, wenn die Formhälften mit Bodeneinsätzen 90 versehen sind, die Formkanten 76 entlang der offenen Kanten der Bodeneinsätze vorgesehen sein. Andererseits können die Bodeneinsätze auch anders als schwenkbar gegenüber den Formhälften beweglich sein, beispielsweise im Sinne einer Absenkbewegung der Einsätze.

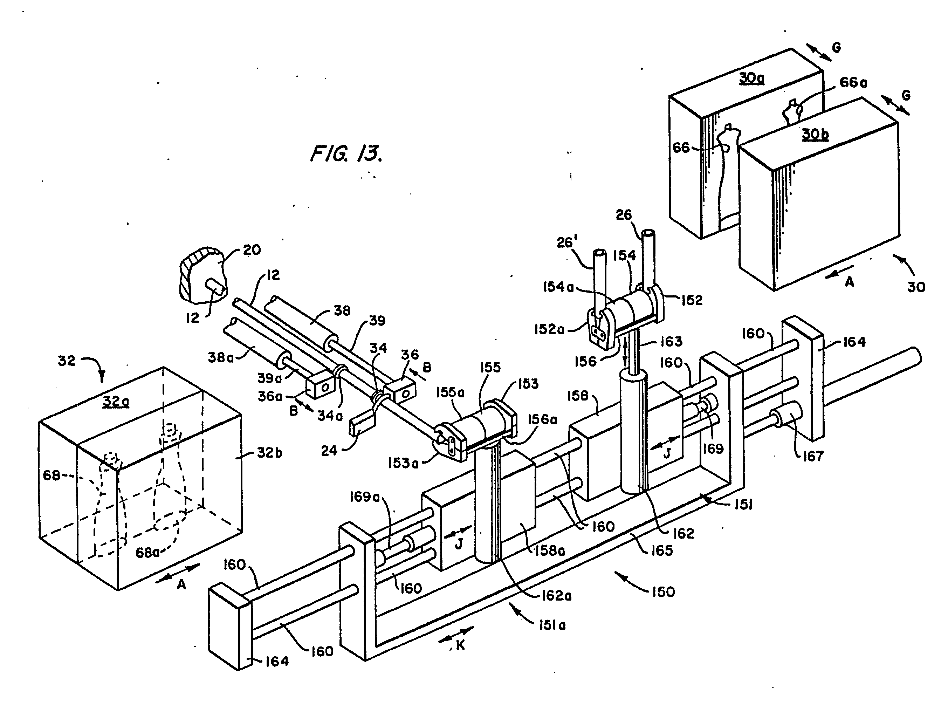

In Fig. 13 ist eine andere Ausführungsform der Rohling-Übergabeeinrichtung dargestellt, wobei vergleichbare Teile mit den gleichen um Einhundert erhöhten Bezugszeichen versehen sind, wie beim vorbeschriebenen Beispiel. Die beiden Ausführungsformen gemäß den Fig. 2 und 13 gemeinsamen Teile, wie die Zuführeinrichtung 22 oder die Blasformen 30, 32 haben die Bezugszeichen unverändert beibehalten. Eine Rohlingübergabeeinrichtung 150 schließt zwei Hauptgreifer ein, und zwar in der Darstellung der Fig. 13 einen rechten Hauptgreifer 151 und einen linken Hauptgreifer 151a, die in einer gemeinsamen Ebene senkrecht zur Längsachse des Rohrstranges 12 bewegbar sind. Die Konstruktion und Funktion jedes dieser Hauptgreifer ist identisch, so daß die folgende Beschreibung des rechten Hauptgreifers 151 auch auf den linken 151a zutrifft und die gleichen Bezugszeichen verwendet werden, wobei allerdings der Zusatz »a« wo immer möglich verwendet wurde, um die übereinstimmenden Teile des linken Hauptgreifers 151a zu kennzeichnen.

Der Hauptgreifer 151 ist mit zwei Paaren oder Sätzen schwenkbarer Klemmen 152 und 152a versehen, die jeweils mit Antrieben 154 und 154a gekoppelt sind, die voneinander unabhängig die individuelle Funktion des zugehörigen Klemmensatzes steuern. Die Klemmensätze 152 und die Antriebe 154 sind zusammen auf einem Klemmenträger 156 montiert, der wiederum beweglich auf einem Hauptgreiferschlitten angebracht ist.

Der Hauptgreiferschlitten 158 ist verschiebbar auf einem Paar von Führungsstangen 160 geführt und mit einem vertikalen Hubmotor 162 verbunden, dessen Hubstange 163 den Klemmenträger 156 mit dem Hauptgreiferschlitten verbindet. Die Betätigung des Hubmotors 162, der ein gewöhnlicher Hydraulik-Zylinder sein kann, hebt und senkt den Klemmenträger 156, um ein Paar von Rohlingen 26, 26' über ein Paar von Blasdornen (nicht dargestellt) innerhalb der Formhöhlungen der Blasform 30 in der bereits früher beschriebenen Weise zu führen. Die Funktion des Hauptgreifers 151 und der Blasform 30 entspricht der früher beschriebenen des Hauptgreifers 50 und der Blasform 30.

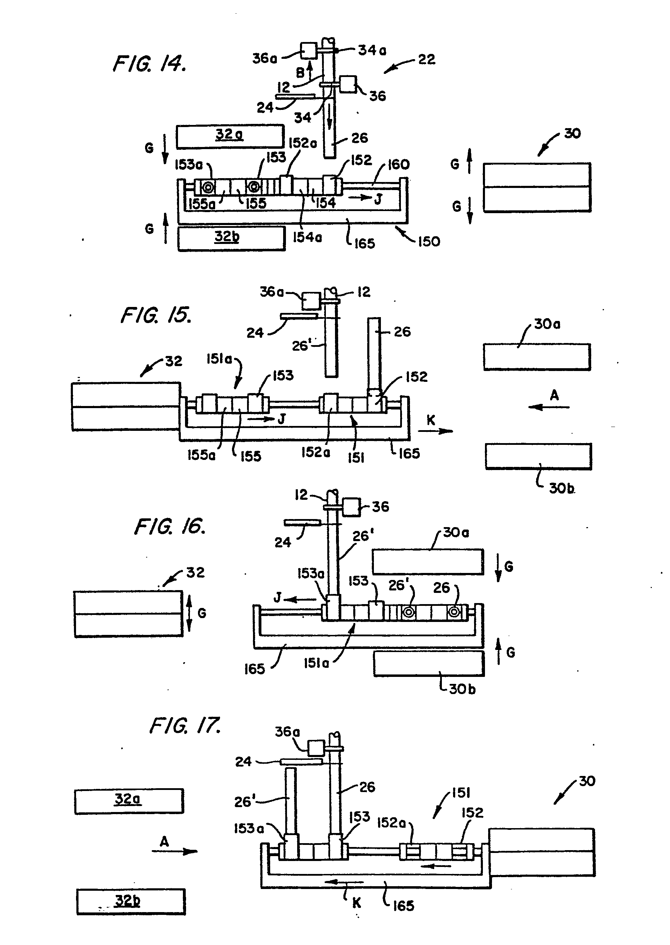

Die Fig. 14 bis 17 zeigen schematisch die Funktion der Rohlingübergabeeinrichtung 150. Die Funktion der Zuführeinrichtung 22 ist identisch mit der früher bezüglich der Übergabeeinrichtung 28 beschriebenen. Kurz gesagt, ziehen die Greiferpaare 34, 34a einander übergreifend und abwechselnd den Rohrstrang 12 aus dem Ofen und führen der Schneideeinrichtung 24 aufeinanderfolgende Rohrabschnitte zu.

In Fig. 14 sind Klemmensätze 152, 152a des rechten Hauptgreifers in die horizontale Lage geschwenkt, parallel zur Längsachse des Rohrstranges 12, wobei der rechte Klemmensatz 152 mit dem Rohrstrang fluchtet. Der Klemmensatz 152 wird durch den Antrieb 154 geschlossen, um das freie Ende des Rohlings 26 zu ergreifen, worauf die Schneideeinrichtung 24 in Tätigkeit tritt und den Rohling vom Rohrstrang 12 abschneidet. Ein Schubmotor 169 (Fig. 13) tritt in Aktion, um den rechten Hauptgreifer 151 nach rechts in Richtung des Pfeiles J in Fig. 14 in die Position zu verschieben, die in Fig. 15 dargestellt ist, um den Klemmensatz 152a in Übereinstimmung mit dem Rohrstrang 12 zu bringen. Der Klemmensatz 152a wird dann um das Ende des Rohlings 26' geschlossen, die Schneideeinrichtung 24 betätigt, um den Rohling vom Rohrstrang 12 zu trennen, und der rechte Hauptgreifer 151 wird verschwenkt, wodurch die Rohlinge, wie in Fig. 16 dargestellt, vertikal ausgerichtet werden. Inzwischen wurden die offenen Hälften 30a, 30b bei der Blasform 30 in Richtung des Pfeiles A (Fig. 15) und der Mittellinie des Rohrstrangs 12 bewegt. Gleichzeitig wird der Schlittenantrieb 167 (Fig. 13) aktiviert, um einen unteren Schlittenträger 165 nach rechts in Richtung des Pfeiles K in Fig. 15 zu verschieben bis in die in Fig. 16 gezeigte Position bezüglich der Form 30 und des rechten Hauptgreifers 151. Der Klemmenträger 156 wird dann von dem Hubmotor 162 angehoben, um die Rohlinge 26, 26' zwischen die Formhöhlungen der Form 30 in der früher beschriebenen Weise zu führen, worauf sich die Formhälften 30a, 30b schließen.

Der Vorgang wird fortgesetzt mit der Aktivierung des linken Schubmotors 169a um den linken Hauptgreifer 151a zur Ausrichtung des Klemmensatzes 153a bezüglich des Rohrstranges 12, von der in Fig. 15 gezeigten Stellung, in die nach Fig. 16 zu verschieben. Der Klemmensatz 153a wird nun um das Ende des Rohlings 26' geschlossen, worauf der Rohling durch die Schneideeinrichtung 24 vom Rohrstrang 12 abgetrennt wird. Der Schubmotor 169a wird dann aktiv und zieht den linken Hauptgreifer 151a nach links in Richtung des Pfeiles J in Fig. 16, um den Klemmensatz 153, wie in Fig. 17 dargestellt, gegenüber der Achse des Rohrstranges 12 auszurichten, wobei der Rohling 26 vom Rohrstrang 12 getrennt wird, nachdem sich der Klemmensatz 153 um ihn geschlossen hat.

Darauf bewegt der Schlittenantrieb 167 (Fig. 13) den Schlittenträger 165 nach links in Richtung des Pfeiles K der Fig. 17, und gleichzeitig werden die geöffneten Formhälften 32a, 32b nach rechts in Richtung des Pfeiles A bewegt. Der Schubmotor 169 verschiebt den rechten Hauptgreifer 151 nach links, nachdem die Klemmensätze 152, 152a in die Horizontale geschwenkt wurden.

Zu diesem Zeitpunkt nimmt die Übergabeeinrichtung 150 die in Fig. 14 gezeigte Stellung ein, wobei die von dem linken Hauptgreifer 151 gehaltenen Rohlinge in die Blasform 32 eingeführt werden, und der Vorgang wird in der vorstehend bezüglich der Form 30 beschriebenen Weise wiederholt.

Gemäß der vorausgegangenen Beschreibung werden die Klemmen der Klemmensätze 52, 52a durch die zugehörigen Antriebe 54, 54a in einer zur Schwenkrichtung der Hauptgreifer parallelen Achse geöffnet bzw. geschlossen. Es können jedoch auch andere Klemmenanordnungen und Antriebsweisen zweckmäßig sein, beispielsweise können die Klemmensätze um zur Schwenkrichtung der Hauptgreifer senkrechte Achsen geöffnet und geschlossen werden, wobei in diesem Fall zunächst der Klemmenträger 56 verschoben wird, und erst dann die Klemmensätze in ihre horizontale Lage über die Enden der Rohlinge geschwenkt werden. Die Antriebe schließen dann die Klemmen um die Endteile der Rohlinge.

Es ist festzustellen, daß auch andere Techniken für das Einbringen der Rohlinge in die Formhöhlungen der Blasformen und für die Durchführung des Längsreckens der Rohlinge von der Erfindung umfaßt werden. Beispielsweise können die Greifer der Übergabeeinrichtungen 50 und 150 für die Aufnahme und die Verschwenkung der Rohlinge in die Vertikale in der vorbeschriebenen Weise arbeiten. Dagegen kann anstelle des vertikalen Ausfahrens der Greifer zur Einbringung der Rohlinge in die Formhohlräume, die Blas- und Kalibriereinrichtung einschließlich der Blasdorne und der konzentrischen Hülsen in an sich bekannter Weise abgesenkt werden, um die Blasdorne in die oberen Enden der Rohlinge einzuführen, worauf die Rohlinge festgeklemmt und beim Anheben der Blasdornanordnung gereckt werden.

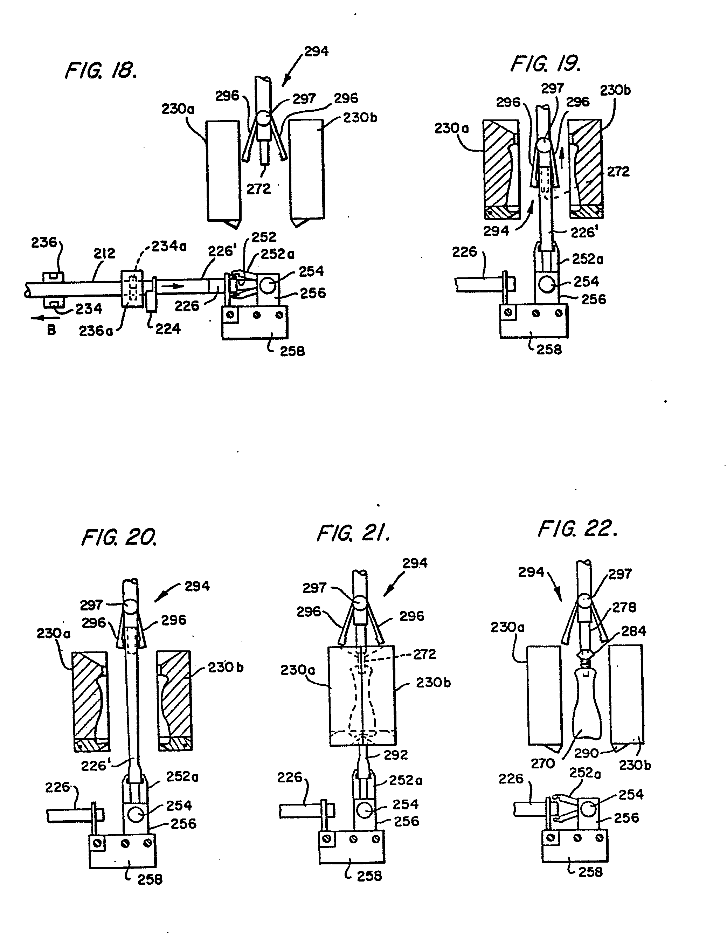

Ein Beispiel der technischen Verwirklichung dieser Methode der Rohlingeübergabe und Rekkung ist in den Fig. 18 bis 22 dargestellt, in welchen den vorbeschriebenen Teilen gemäß den Fig. 1 bis 17 ähnliche oder mit diesen übereinstimmende Elemente mit um Zweihundert erweiterten, gleiche Endziffern aufweisenden Bezugszeichen versehen sind.

Wie in Fig. 18 dargestellt, wird der Rohrstrang 212 von den Greifern 234a in Pfeilrichtung an der Schneideeinrichtung 224 vorbei in Richtung auf die Klemmensätze 252a, die horizontal ausgerichtet sind, geführt. Das Ende eines Rohlings 226 wurde von dem Klemmsatz 252 ergriffen, und die Greifer 234 werden in Pfeilrichtung B zurückgezogen. Wenn auch Fig. 18 eine der Übergabeeinrichtung 50, wie in den Fig. 2 bis 12 dargestellt und vorstehend beschrieben, entsprechende Anordnung zeigt, so wäre natürlich die Greiferanordnung 150 der Fig. 13 bis 17 in gleicher Weise abwandelbar.

Ebenfalls aus Fig. 18 ersichtlich sind die geöffneten Formhälften 230a, 230b mit einer sich zwischen ihnen befindlichen hin- und herbeweglichen Blas- und Kalibriereinrichtung 294. Die Blas- und Kalibriereinrichtung 294 weist einen verschiebbaren Blasdorn 272, der koaxial von einer rohrförmigen und bezüglich des Blasdornes hin- und herbeweglichen Hülse umgeben ist sowie ein Paar bezüglich einer zur Längsachse des Blasdornes 272 senkrechten Achse schwenkbarer Klemmbacken 296 auf, die mittels eines Antriebs 297 geöffnet und geschlossen werden. Die Blas- und Kalibriereinrichtung 294 und ihre zugehörigen Elemente sowie die Formhälften 230a, 230b sind mit nicht dargestellten, bekannten Steuerungs- und Befestigungseinrichtungen versehen.

Die Erfindung ist anwendbar auf die Herstellung molekular orientierter Gegenstände aus irgendeinem orientierbaren thermoplastischen Kunststoff, wie Polyolefine, Polyvinylchloride, Acrylnitril-Butadien-Styrol-Polymere, Styrol-Butadien-Copolymere, verschiedene Styrol-Polymere und Copolymere, Polyamide, Polyvinylidenchlorid-Polymere und Copolymere u. dgl. Zusätzlich zu dem früher erwähnten Polypropylen, einem bevorzugten Kunststoff schließen andere bevorzugte Kunststoffe kristalline Polymere, wie die Polymere mit wenigstens einem Mono-1-Olefin mit zwei bis acht Kohlenstoffatomen pro Molekül und noch bevorzugter Polymere und Copolymere von Äthylen-Propylen und 1-Buten ein.

Obwohl in den Zeichnungen nicht eigens dargestellt, ist es selbstverständlich, daß alle vorbeschriebenen Teile innerhalb eines vollständigen und funktionsfähigen Systems angeordnet und verbunden sind. Es ist auch selbstverständlich, daß alle Hilfseinrichtungen, wie Hydrauliksysteme, Pumpen, Druckspeicher, Kontrollsysteme usw., nicht besonders beschrieben, jedoch in dieser Technik bekannt und als zu einem funktionsfähigen System gehörig zu betrachten sind. Selbstverständlich können Abweichungen von der spezifischen Konstruktion und Anordnung der Blasformeinrichtungen zur Ausformung hohler Behälter aus orientiertem Material, wie vorbeschrieben, im Rahmen des durchschnittlichen Fachkönnens nicht aus dem Schutzumfang der Ansprüche herausführen.

## Patentansprüche

1. Verfahren zur Herstellung molekularer biaxial orientierter Hohlkörper aus thermoplastischen Kunststoffen, wobei ein auf eine für die molekulare Orientierung geeignete Temperatur gebrachter, vertikal ausgerichteter rohrförmiger Rohling (26, 26') am oberen Ende festgeklemmt, am unteren Ende von einem Greifer (50; 151; 151a) erfaßt, mechanisch axial gereckt, von einer sich schließenden Blasform (30a, 30b; 32a, 32b) aufgenommen, mittels eines in das obere Ende ragenden Blasdornes (72, 272) durch Einführen eines Druckmittels zu einem Hohlkörper (70, 270) ausgeformt und nach Öffnen der Form entformt wird, dadurch gekennzeichnet, daß ein Rohrstrang (12) horizontal von einer Zuführeinrichtung (22) aus einem Ofen (20) herausgezogen, an seinem vorderen Ende von einem einen Teil einer mehrteiligen Übergabeeinrichtung (28, 150) bildenden Greifer (40; 151, 151a) erfaßt, unter Bildung eines Rohlings (26, 26') durch eine Schneideeinrichtung (24) vom Rohrstrang (12) abgetrennt, von der horizontalen in eine vertikale Stellung geschwenkt und zwischen die geöffnete Form (30a, 30b; 32a, 32b) gebracht wird; daß die Form erst geöffnet wird nach dem Abtrennen entstandener Abfallteile (84, 92; 284, 292) vom Hohlkörper (70, 270), während der Greifer (50; 151, 151a) zwischenzeitlich zur Aufnahme eines weiteren Rohlings (26, 26') und Wiederholung der Verfahrensabläufe in seine Ausgangsposition zurückgekehrt ist, wobei die Übergabeeinrichtung (28, 150) abwechselnd mit zwei Blasformen (30, 32) zusammenwirkt, so daß das Einführen eines Rohlings zwischen eine geöffnete Form und das Recken erfolgen kann, während gleichzeitig ein Hohlkörper in der zweiten geschlossenen Form gebildet wird.

2. Verfahren nach Anspruch 1, dadurch gekennzeichnet, daß die Übergabeeinrichtung (150) aus zwei Hauptgreifern (151, 151a) besteht, die mit den jeweils zugehörigen Formen (30, 32) in einer gemeinsamen zur Zuführrichtung der Rohlinge senkrechten Ebene bewegbar sind.

3. Verfahren nach Anspruch 1, dadurch gekennzeichnet, daß die Übergabeeinrichtung (28) aus einem Hilfsgreifer (40) und einem Hauptgreifer (50) besteht, die in zwei parallelen in Zuführrichtung der Rohlinge aufeinanderfolgenden und zu ihr senkrechten Ebenen bewegbar sind.

4. Verfahren nach Anspruch 3, dadurch gekennzeichnet, daß der erste Rohling (26) von dem in der in Zuführrichtung ersten Ebene bewegbaren Hilfsgreifer (40) ergriffen und horizontal parallel zur Zuführrichtung seitlich aus dieser herausbewegt und danach sowohl der vom Hilfsgreifer (40) gehaltene erste (26) als auch der nachfolgend zugeführte zweite Rohling (26') gleichzeitig von in der zweiten Ebene bewegbaren Hauptgreifer (50) ergriffen werden, worauf der Hilfsgreifer (40) geöffnet und beide Rohlinge (26, 26') gemeinsam durch den Hauptgreifer (50) in eine vertikale Aufnahmestellung geschwenkt werden.

5. Verfahren nach Anspruch 3, dadurch gekennzeichnet, daß die Formen (30, 32) und der Hauptgreifer (50) in der zweiten Ebene bewegt werden.

6. Verfahren nach Anspruch 1, dadurch gekennzeichnet, daß die Rohlinge durch den Hauptgreifer (50) zunächst in eine vertikale Aufnahmestellung geschwenkt, dann angehoben und über die wartenden Blasdorne (72) geschoben werden, um diese festgeklemmt und darauf bei einer gesteuerten Absenkung des Hauptgreifers (50) während seiner Rückkehr in die Ausgangsstellung in einem vorbestimmten Verhältnis axial gereckt zu werden.

7. Verfahren nach Anspruch 6, dadurch gekennzeichnet, daß nach dem Schließen der Form (30, 32) der Hauptgreifer über eine dem gewünschten Reckgrad entsprechende Zwischenposition hinaus abgesenkt wird, um den Bodenabfall (92) abzureißen.

8. Verfahren nach Anspruch 1, dadurch gekennzeichnet, daß die Blasdorne (272) in die oberen Enden der in eine vertikale Aufnahmestellung geschwenkten Rohlinge (26, 26') abgesenkt und nach deren Festklemmen unter vorgegebener axialer Längung der Rohlinge wieder angehoben werden.

9. Verfahren nach Anspruch 1, dadurch gekennzeichnet, daß das Festklemmen der Rohlinge (26, 26') um die Blasdorne (72) außerhalb der Begrenzung der die Form der gewünschten Hohlkörper (70, 270) definierenden Formhöhlungen (66, 66a; 68, 68a) erfolgt.

10. Verfahren nach Anspruch 1, dadurch gekennzeichnet, daß das mechanische Recken der Rohlinge (26, 26') über die entsprechenden Begrenzungen der die Form der gewünschten Hohlkörper (70, 270) definierenden Formhohlräume (66, 66a; 68, 68a) hinaus erfolgt, bevor die Form (30, 32) geschlossen wird.

11. Verfahren nach Anspruch 1, dadurch gekennzeichnet, daß beim Schließen der Form (30, 32) eine eine Dichtfläche bildende, verhältnismäßig dicke Quetschnaht (88) an dem auszuformenden Hohlkörper (70) gebildet wird.

12. Verfahren nach Anspruch 1, dadurch gekennzeichnet, daß der Hohlkörper (70) am Boden mit einer Einwölbung (86) versehen wird.

13. Verfahren nach Anspruch 12, dadurch gekennzeichnet, daß vor dem Öffnen der Form (30) die Bodeneinsätze (90, 290) aus der Einwölbung (86) der Hohlkörper (70) heraus abgesenkt werden.

14. Verfahren nach Anspruch 1, dadurch gekennzeichnet, daß die Zufuhr des Druckmittels noch vor dem Schließen der Form erfolgt und die Klemmung der Rohlinge auch nach dem Schließen der Form noch so lange aufrechterhalten wird, bis durch eine Axialbewegung der Blasdorne (72, 272) in Richtung der Formhohlräume die Halsbereiche der Hohlkörper (70, 270) ausgeformt sind, worauf die Klemmung aufgehoben und das Abfallmaterial (84) mittels auf den Blasdornen (72, 272) verschiebbarer Hülsen (78, 278) abgetrennt und nach dem Öffnen der Form zunächst die Hohlkörper (70, 270) unter Zurückziehung der Blasdorne (72, 272) und erst danach das Abfallmaterial (84) mit Hilfe von Abstreifeinrichtungen (80) abgeworfen werden.

15. Vorrichtung zur Durchführung des Verfahrens nach den Ansprüchen 1 bis 14, wobei zur Ausformung eines auf die für die molekulare Orientierung geeignete Temperatur gebrachten, vertikal ausgerichteten rohrförmigen Rohlings (26, 26') ein in dessen oberes Ende ragender Blasdorn (72, 272), dieses Ende festklemmende Klemmbacken (74, 296), ein das untere Ende erfassender und axial reckender Greifer (50, 151, 151a) sowie eine Blasform (30a, 30b; 32a, 32b) vorgesehen sind, gekennzeichnet durch ein Paar greifer (34, 34a) einer Zuführeinrichtung (22), die einander übergreifend mit einstellbarem Hub horizontal hin- und herbeweglich vor einer Schneideinrichtung (24) angeordnet sind, an die sich eine Übergabeeinrichtung (28, 150) anschließt, die senkrecht zur Bewegung der Zuführeinrichtung (22) hin- und herbeweglich ist und die aus mehreren Greifern (40, 50 bzw. 151, 151a) besteht, von welchen mindestens einer zusätzlich zu seiner Reckfunktion schwenkbar ist; durch zwei oberhalb der Endpunkte der Bewegungsbahnen der schwenkbaren Greifer (50; 151, 151a) angeordnete Blasformen (30, 32), die in gleicher Richtung wie die Greifer (50; 151, 151a) hin- und herbewegt und senkrecht dazu geöffnet und geschlossen werden; durch außerhalb der Formen (30, 32) angeordnete und mit ihnen hin- und herbewegliche Blas- und Kalibriereinrichtungen (82, 294) mit axial verschiebbaren Blasdornen (72, 272) um die die Klemmbacken (74, 296) geschlossen werden und durch Einrichtungen zur Erzeugung einer Relativbewegung zwischen den Blasdornen (72, 272) und Klemmbacken (74, 296) sowie den schwenkbaren Greifern (50; 151, 151a) und zur programmierbaren Steuerung und Herbeiführung der Bewegung der übrigen Vorrichtungsteile.

16. Vorrichtung nach Anspruch 15, dadurch gekennzeichnet, daß die Übergabeeinrichtung Hauptgreifer (50, 151, 151a) mit wenigstens zwei für die Schwenkung aus der horizontalen Richtung heraus drehbar angeordneten Klemmen (52, 152, 153) einschließt und zur Ausrichtung jeder der Klemmen bezüglich der horinzontalen Zuführrichtung der Rohlinge hin- und herbeweglich ist, um jeweils ein Endteil des Rohlings aufzunehmen und festzuhalten.

17. Vorrichtung nach Anspruch 15, dadurch gekennzeichnet, daß die Übergabeeinrichtung einen Hilfsgreifer (40) aufweist, der in einer Ebene parallel zu der Hin- und Herbewegung des Hauptgreifers (50) bewegbar ist und der Sätze von schwenkbaren Zangen (44, 44a) aufweist, die einen Rohling ergreifen können und in der genannten parallelen Ebene bewegbar sind, um jede Zange in der horizontalen Zuführrichtung der Rohlinge auszurichten, wobei der Hilfsgreifer die von den Klemmen (52, 52a) des Hauptgreifers (50) zu erfassenden Rohlinge von der Zuführeinrichtung (22) übern.mmt.

18. Vorrichtung nach Anspruch 16, dadurch gekennzeichnet, daß beide Hauptgreifer (151, 151a) achsgleich auf einem gemeinsamen Schlittenträger (165) angeordnet und horizontal schwenkbar sind.

19. Vorrichtung nach Anspruch 16, dadurch gekennzeichnet, daß die schwenkbaren Hauptgreifer (50, 151, 151a) auch vertikal heb- und senkbar sind.

20. Vorrichtung nach Anspruch 15, dadurch gekennzeichnet, daß die Klemmbacken (74) oberhalb des Halsteils der Formhöhlung (66, 66a, 68, 68a) verschiebbar in die Formen (30, 32) eingesetzt sind.

21. Vorrichtung nach Anspruch 15, dadurch gekennzeichnet, daß die Blasdorne (272) zusammen mit ihren Klemmbacken (296) gegenüber den Greifern im Sinne einer gesteuerten Relativbewegung vertikal heb- und senkbar sind.

22. Vorrichtung nach Anspruch 15, gekennzeichnet durch auf den Blasdornen (27, 272) unabhängig von deren axialer Bewegung verschiebbare Trennhülsen (78, 278).

23. Vorrichtung nach Anspruch 15, gekennzeichnet durch Bodensätze (90, 290) der Formen (30, 32), die gegenüber den anderen Formteilen (30a, 30b; 32a, 32b) bewegbar sind.

**Claims**

1. A process for the production of molecularly biaxially oriented hollow bodies of thermoplastic materials, wherein a vertically positioned tubular parison (26, 26') heated to a temperature suitable for the molecular orientation is clamped at its upper end, seized at its lower end by a gripper (50; 151, 151a), mechanically axially stretched, received by a blow moulder (30a, 30b; 32a, 32b) being closed, moulded to a hollow body (70, 270) by introduction of a pressure means by way of a blow pin (72, 272) extending into the upper end, and is discharged after the moulder has been opened, characterized in that a continous tube (12) is horizontally drawn out of an oven (20) by a conveying means (22), grasped by a gripper (50; 151, 151a) being part of a composite transfer assembly (28, 150) at its forward end, severed by a cutter (24) from the continous tube (12) thus producing a parison (26, 26') pivoted from the horizontal to a vertical position and transferred between the open moulder (30a, 30b; 32a, 32b); further in that the moulder is only opened after seperation of collaterally produced surplus material (84, 92; 284, 292) from the hollow body (70, 270), while in the meantime the gripper (50; 151, 151a) has returned to its starting position for taking up a further parison and repetition of the steps of the process; wherein the transfer assembly (28, 150) alternatively cooperates with two blow moulders (30, 32) to allow for the introduction of a parison between the opened moul-

der while concurrently a hollow body is formed in the second, closed moulder.

2. A process according to claim 1, characterized in that the transfer assembly (150) comprises two main grippers (151, 151a), which together with the respective coordinate moulders are movable in common plane normal to the feeding direction of the parisons.

3. A process according to claim 1, characterized in that the transfer assembly (28) consists of a subsidiary gripper (40) and a main gripper (50) movable in two parallel planes consecutive in the feeding direction of the parisons, and perpendicular thereto.

4. A process according to claim 3, characterized in that the first parison (26) is grasped by the subsidiary gripper (40) movable in the first plane with respect to the feeding direction and is horizontally, parallel to the feeding direction moved laterally outside of the latter and that thereafter the first parison (26) supported by the subsidiary gripper (40) as well as the second parison (26') consecutively fed are seized by the main gripper (50) movable in the second plane, whereupon the subsidiary gripper (40) is opened and both parisons (26, 26') are jointly pivoted to a vertical receiving position by the main gripper (50).

5. A process according to claim 3, characterized in that the moulders (30, 32) and the main gripper (50) are moved in the second plane.

6. A process according to claim 1, characterized in that the parisons are first rotated by the main gripper, then raised and pushed over the waiting blow pins (72), clamped about them and thereafter axially stretched in a predetermined ratio by a controlled lowering of the main gripper (50) during its return to the starting position.

7. A process according to claim 6, caracterized in that after closure of the moulder (0, 32) the main gripper is lowered below an intermediate position corresponding to the predetermined stretch ratio, to tear off the bottom surplus (92).

8. A process according to claim 1, characterized in that the blow pins (272) are lowered into the upper ends of the parisons which have been rotated to a vertical receiving position and are raised again after clamping of the latter with a consequent predetermined axial stretching of the parisons.

9. A process according to claim 1, characterized in that the clamping of the parisons (26, 26') around the blow pins (72) takes place outside the limitations of the moulding cavities (66, 66a; 68, 68a) defining the shape of the desired hollow bodies (70, 270).

10. A process according to claim 1, characterized in that the mechanical stretching of the parisons (26, 26') beyond the respective limitations of the moulding cavities (66, 66a; 68, 68a) defining the shape of the desired hollow bodies (70, 270) is performed before the moulder (30, 32) is closed.

11. A process according to claim 1, characterized in that by the closure of the moulder (30, 32) a relatively thick seam (88) presenting a sealing surface is produced on the hollow body (70) being shaped.

12. A process according to claim 1, characterized in that the hollow body (70) is provided with an inward vault (86) at the bottom.

13. A process according to claim 12, characterized in that prior to the opening of the moulder (30) the bottom inserts (90, 290) are lowered out of the inward vault (86) of the hollow bodies (70).

14. A process according to claim 1, characterized in that the introduction of the pressure means takes place even before closure of the moulder and the clamping of the parisons is still continued after closure of the moulder until the neck portions of the hollow bodies (70, 270) have been formed by an axial movement of the blow pins (72, 272) in the direction of the moulding cavities, whereupon the clamping is released and the surplus material (84) is separated by means of tubular sleeves (78, 278) slidable on the blow pins (72, 272) and after opening of the moulder first the hollow bodies (70, 270) are released by retraction of the blow pins (72, 272) and only pursuant thereto the surplus material (84) with the aid of stripper means (80).

15. An apparatus for practising the method of claims 1 to .14, wherein for the moulding of a vertically positioned, tubular parison (26, 26') heated to a temperature suitable for the molecular orientation there is provided a blow pin (72, 272) extending into its upper end, tube clamps (74, 296) for clamping said end, a gripper (50; 151, 151a) seizing the lower end and stretching it axially, and a blow moulder (30a, 30b; 32a, 32b), characterized by a pair of grippers (34, 34a) of a conveying means (22), which horizontally reciprocable in a hand-over-hand manner are arranged ahead of cutting means (24), followed by a transfer assembly (28, 150) reciprocable perpendicular to the motion of the conveying means (22) and consisting of a plurality of grippers (40, 50 respectively 151, 151a) of which at least one is pivotable in addition to its stretching operation; by two blow moulders (30, 32) which are provided above the end of movement of the pivotable grippers (50; 151, 151a), reciprocable in the same direction as the grippers (50; 151, 151a) and opened and closed perpendicular thereto; by blowing and calibrating means (82, 294) positioned outside the moulders (30, 32) and reciprocable therewith including axially movable blow pins (72, 272) about which the tube clamps (74, 296) are closed; and by means for causing a relative movement between the blow pins (72, 272) and tube clamps (74, 296) as well as the pivotable grippers (50; 151, 151a) and for the programmed control and provision of the operation of the remaining components of the apparatus.

16. An apparatus according to claim 15, characterized in that the transfer assembly includes main grippers (50; 151, 151a) with at least two clamps (52, 152, 153) pivotably mounted for rotation out of the horizontal position, and is reciprocable for the alignment of each of the clamps with respect to the horizontal feeding direction of the parisons to receive and grasp a respective end of the parison.

17. An apparatus according to claim 15, characterized in that the transfer assembly comprises a subsidiary gripper (40) movable in a plane parallel to the reciprocating movement of the main gripper and provided with sets of pivotable jaws (44, 44a), that may seize a parison and are movable in said parallel plane, to align each jaw in the horizontal feeding direction of the parisons, the subsidiary gripper receiving from the conveying means (22) the parisons which are to be seized by the clamps (52, 52a) of the main gripper (50).

18. An apparatus according to claim 16, characterized in that both the main grippers (151, 151a) are aligned on a common carriage support (165) and horizontally pivotable.

19. An apparatus according to claim 16, characterized in that the pivotable main grippers (50; 151, 151a) may in addition be vertically raised and lowered.

20. An apparatus according co claim 15, characterized in that the tube clamps (74) are slidably inserted in the moulders (30, 32) above the neck region of the moulding cavities (66, 66a; 68, 68a).

21. An apparatus according to claim 15, characterized in that the blow pins (272) together with their related tube clamps (296) can be vertically raised and lowered with respect to the grippers (151, 151a) in the manner of a controlled relative movement.

22. An apparatus according to claim 15, characterized by tubular sleeves (78, 278) slidable on the blow pins (72, 272) independent of the axial movement of the latter.

23. An apparatus according to claim 15, characterized by the moulders being provided with bottom inserts (90, 290) which are movable with respect to the rest of the mould sections (30a, 30b; 32a, 32b).

## Revendications

1. Procédé pour la fabrication de corps creux à orientation moléculaire biaxiale en manière thermoplastiques, dans lequel on fixe à son extrémité supérieur une ébauche tubulaire (26, 26') dressée verticalement et portée à la température appropriée pour l'orientation moléculaire, on la saisit à son extrémité inférieure à l'aide d'un dispositif préhenseur (50; 151, 151a), on l'étire mécaniquement dans le sens axial, on l'introduit dans un moule de soufflage (30a, 30b; 32a, 32b) se fermant et, au moyen d'une buse de soufflage (72, 272) pénétrant dans l'extrémité supérieure, on la moule en un corps creux (70, 270) par injection d'un fluide sous pression, puis on la démoule après l'ouverture du moule, caractérisé par le fait qu'on tire une veine tubulaire (12) horizontalement d'un four (20) à l'aide d'un dispositif d'amenée (22), qu'on la saisit à son extrémité avant par un dispositif préhenseur (40; 151, 151a) constituant une partie d'un dispositif de transfert (28, 150) en plusieurs parties, qu'au moyen d'un dispositif de coupe (24) on la détache de la veine tubulaire (12) en formant une ébauche (26, 26'), qu'on la fait basculer d'une position horizontale à une position verticale et qu'on l'amène entre le moule ouvert (30a, 30b; 32a, 32b), qu'on n'ouvre le moule qu'après enlèvement des déchets formés (84, 92; 284, 292) du corps creux (70, 270) pendant qu'entre temps on ramène le dispositiv préhenseur (50; 151, 151a) à sa position initiale pour la prise en charge d'une autre ébauche (26, 26') et répétition des phases du procédé, le dispositif de transfert (28, 150) coopérant alternativement avec deux moules de soufflage (30, 32) de façon que l'amenée d'une ébauche entre un moule ouvert et l'étirage puisse se faire pendant que simultanément un corps creux est formé dans le second moule fermé.

2. Procédé selon la revendication 1, caractérisé par le fait que le dispositif de transfert (150) se compose de deux dispositifs préhenseurs principaux (151, 151a) qui, avec les moules respectifs correspondants (30, 32), peuvent se déplacer dans un plan commun perpendiculaire au sens de l'amenée des ébauches.

3. Procédé selon la revendication 1, caractérisé par le fait que le dispositif de transfert (28) se compose d'un dispositif préhenseur auxiliaire (40) et d'un dispositif préhenseur principal (50) qui sont déplaçables dans deux plans parallèles se succédant dans le sens de l'amenée des ébauches et perpendiculaire à celui-ci.

4. Procédé selon la revendication 3, caractérisé par le fait que la première ébauche (26) est saisie par le dispositif préhenseur auxialiaire (40) déplaçable dans le premier plan dans le sens de l'amenée et est extraite latéralement de ce dernier horizontalement et parallèlement au sens de l'amenée et qu'ensuite aussi bien la première ébauche (26) maintenue par le dispositif préhenseur auxiliaire (40) que la seconde ébauche (26') amenée successivement sont simultanément saisies par le dispositif préhenseur principal (50) déplaçable dans le second plan, après quoi, le dispositif préhenseur auxiliaire (40) est ouvert et les deux ébauches (26, 26') sont pivotées en commun par le dispositif préhenseur principal (50) dans une position de prise en charge verticale.

5. Procédé selon la revendication 3, caractérisé par le fait que les moules (30, 32) et le dispositif préhenseur principal (50) sont déplacés dans le second plan.

6. Procédé selon la revendication 1, caractérisé par le fait que les ébauches sont pivotées par le dispositif préhenseur principal (50) tout d'abord dans uns position de prise en charge verticale, sont ensuite soulevées et poussées sur les buses de soufflage (72) en attente, fixées autour de celle-ci, puis, par un mouvement de descente commandé du dispositif préhenseur principal (50), sont étirées axialement dans un rapport prédéterminé pendant son retour à la position initiale.

7. Procédé selon la revendication 6, caractérisé par le fait qu'après le fermeture de moule (30, 32), le dispositif préhenseur principal est abaissé au-delà d'une position intermédiaire correspondant au degré de tirage souhaité pour enlever les déchets (92) du fond.

8. Procédé selon la revendication 1, caractérisé par le fait que les buses de soufflage (272) sont abaissées dans les extrémités supérieures des ébauches (26, 26') pivotées dans une position de prise en charge verticale et, après leur serrage, sont à nouveau soulevées en provoquant un allongement axial prédéterminé des ébauches.

9. Procédé selon la revendication 1, caractérisé par le fait que la fixation des ébauches (26, 26') autour des buses de soufflage (72) s'effectue à l'extérieur de la limitation des empreintes (66, 66a; 68, 68a) du moule définissant la forme des corps creux désirés (70, 270).

10. Procédé selon la revendication 1, caractérisé par le fait que l'étirage mécanique des ébauches (26, 26') au-delà des limitations correspondantes des empreintes (66, 66a; 68, 68a) du moule définissant la forme des corps creux désirés (70, 270) s'effectue avant que le moule (30, 32) soit fermé.

11. Procédé selon la revendication 1, caractérisé par le fait que lors de la fermeture du moule (30, 32) un cordon d'écrasement (88) relativement épais et constituant une surface d'étanchéité est formé sur le corps creux (70) à mouler.

12. Procédé selon la revendication 1, caractérisé par le fait que le corps creux (70) est muni d'un creux (86) au niveau de son fond.

13. Procédé selon la revendication 12, caractérisé par le fait qu'avant l'ouverture du moule (30) les garnitures du fond (90, 290) sont abaissées hors du creux (86) des corps creux (70).

14. Procédé selon la revendication 1, caractérisé par le fait que l'amenée du fluide sous pression s'effectue encore avant la fermeture du moule et que le serrage des ébauches est maintenu même après la fermeture du moule jusqu'à que les zones du goulot des corps creux (70, 270) soient moulées par un déplacement axial des buses de soufflage (72, 272) dans le sens des empreintes du moule, après quoi le serrage est supprimé et le matériau de rebut (84) est enlevé au moyen de manchons (78, 278) déplaçables sur les buses de soufflage (72, 272) et qu'après l'ouverture du moule, ce sont tout d'abord les corps creux (70, 270) qui sont enlevés avec retrait des buses de soufflage (72, 272) et que ce n'est qu'après que le matériau de rebut (84) est enlevé à l'aide de dispositifs de raclage (80).

15. Dispositif pour la mise en oeuvre du procédé selon les revendications 1 à 14, dans lequel pour le moulage d'une ébauche tubulaire (26, 26') dressée verticalement et portée à la température appropriée pour l'orientation moléculaire, on prévoit une buse de soufflage (72, 272) pénétrant dans l'extrémité supérieure de l'ébauche, des mâchoires de serrage (74, 296) enserrant cette extrémité, un dispositif préhenseur (50; 151, 151a), saisissant l'extrémité inférieure et l'étirant axialement, ainsi qu'un moule de soufflage (30a, 30b; 32a, 32b), caractérisé par une paire de griffes (34, 34a) d'un dispositif d'amenée (22) qui, se superposant l'une l'autre, sont disposées déplaçables horizontalement en un mouvement de va-et-vient à course réglable devant un dispositif de coupe (24) auquel se raccorde un dispositif de transfert (28, 150) qui est déplaçable en un mouvement de va-et-vient perpendiculairement au déplacement du dispositif d'amenée (22) et se compose de plusieurs dispositifs préhenseurs (40, 50 ou 151, 151a) dont au moins un est pivotable en plus de sa fonction d'étirage; par deux moules de soufflage (30, 32) qui, disposés au-dessus des points d'extrémité des trajectoires des dispositifs préhenseurs pivotable (50; 151, 151a), sont déplacés en un mouvement de va-et-vient dans le même sens que les dispositifs préhenseurs (50; 151, 151a) et ouverts et fermés perpendiculairement à ce dernier; par des installations de soufflage et de calibrage (82, 294) disposés à l'extérieur des moules (30, 32), déplaçables avec eux en un mouvement de va-et-vient et comportant des buses de soufflage (72, 272) déplaçables axialement autour desquelles sont refermées les mâchoires de serrage (74, 296) et par des dispositifs pour la production d'un mouvement relatif entre les buses de soufflage (72, 272) et les mâchoires de serrage (74, 296) ainsi que les dispositifs préhenseurs pivotables (50; 151, 151a) et pour la commande programmée et la production du déplacement des autres éléments du dispositif.

16. Dispositif selon la revendication 15, caractérisé par le fait que le dispositif de transfert comprend des dispositifs préhenseurs principaux (50; 151, 151a) comportant au moins deux pinces (52, 152, 153) montée rotatives pour le pivotement en dehors du sens horizontal, et peut se déplacer en un mouvement de va-et-vient en vue de l'alignement de chacune des mâchoires par rapport au sens de l'amenée horizontale des ébauches pour prendre en charge et maintenir à chaque fois une partie d'extrémité de l'ébauche.

17. Dispositif selon la revendication 15, caractérisé par le fait que le dispositif de transfert comprend un dispositif préhenseur auxiliaire (40) qui est déplaçable dans un plan parallèlement au mouvement de va-et-vient du dispositif préhenseur principal (50) et comporte des jeux de mâchoires pivotable (44, 44a) qui peuvent saisir une ébauche et son déplaçables dans le plan parallèle précité pour ajuster chaque mâchoires dans le sens de l'amenée horizontale des ébauches, le dispositif préhenseur auxiliaire prenant en charge les ébauches provenant du dispositif d'amenée (22) et devent être saisies par les pinces (52, 52a) du dispositif préhenseur principal (50).

18. Dispositif selon la revendication 16, caractérisé par le fait que les deux dispositifs préhenseurs principaux (151, 151a) sont disposés coaxialement sur un support commun (165) et sont pivotables horizontalement.

19. Dispositif selon la revendication 16, caractérisé par le fait que les dispositifs préhenseurs principaux pivotables (50; 151, 151a) peuvent également être soulevés et abaissés verticalement.

20. Dispositif selon la revendication 15, caractérisé par le fait que les mâchoires de serrage (74) sont montées déplaçables dans les moules (30, 32) au-dessus de la partie du goulot du l'empreinte (66, 66a; 68, 68a).

21. Dispositif selon la revendication 15, caractérisé par le fait que les buses de soufflage (272) avec leurs mâchoires de serrage (296) peuvent être soulevées et abaissées verticalement par rapport aux organes préhenseurs dans le sens d'un mouvement relatif commandé.

22. Dispositif selon la revendication 15, caractérisé par des manchons de séparation (78, 278) déplaçables sur les buses de soufflage (72, 272) indépendamment de leur mouvement axial.

23. Dispositif selon la revendication 15, caractérisé par des garnitures de fond (90, 290) des moules (30, 32), qui sont déplaçables par rapport aux autres parties du moule (30a, 30b; 32a, 32b).

# FIG. 1.

| EXTRUDER | SIZER | COOLER | | OVEN | P | | T |
| 10  12 | 14 | 16 | 18  20 | 22 | 26  24  C | 28 |

30

32

A

A

# FIG. 2.

FIG. 3.

FIG. 4.

FIG. 5.

FIG. 6.

FIG. 7.

FIG. 8.

FIG. 9.

FIG. 10.

FIG. 11.

FIG. 12.

FIG. 13.

FIG. 14.

FIG. 15.

FIG. 16.

FIG. 17.

0 041 073

FIG. 18.

FIG. 19.

FIG. 20.

FIG. 21.

FIG. 22.

25